# EUROPÄISCHE PATENTSCHRIFT

(11) **EP 0 697 173 B1**
(45) Veröffentlichungstag und Bekanntmachung des Hinweises auf die Patenterteilung: **31.03.1999**
(21) Anmeldenummer: 95111632.6
(22) Anmeldetag: 24.07.1995
(51) Int. Cl.: A01N 47/06, A01N 43/70, A01N 43/66

(54) **Konzentrierte stabile Suspension von herbizid wirkenden 1,3,5-Triazinen und Pyridate**
Stable concentrated suspension of herbicidal 1,3,5-triazines and pyridate
Suspensions concentrées stabiles de 1,3,5-triazines herbicides et pyridate

(30) Priorität: 25.07.1994 AT 1466/94
(43) Veröffentlichungstag der Anmeldung: 21.02.1996
(73) Patentinhaber: Novartis AG, 4058 Basel (CH); Novartis-Erfindungen Verwaltungsgesellschaft m.b.H., 1230 Wien (AT)
(72) Erfinder: Schneider, Rudolf, A-4040 Linz (AT); Leitner, Harald, A-4064 Oftering (AT); Tramberger, Hermann, A-3350 Haag (AT); Sturm, Michael, A-4060 Leonding (AT); Auer, Engelbert, A-4060 Leonding (AT)

(56) Entgegenhaltungen:
- EP-A- 0 009 616
- EP-A- 0 165 393
- DATABASE WPI Section Ch, Week 8207 Derwent Publications Ltd., London, GB; Class C03, AN 82-12589E & JP-A-57 002 202 ( ISHIHARA SANGYO KAISHA) , 7.Januar 1982
- Z. PFL.KRANKH. PFL.SCHUTZ, SONDERH. XII, 1990 Seiten 509-514, J. ROLA & H. ROLA 'Bekämpfung von Triazin-resistenten Unkräutern in Mais in Südwest-Polen.'
- RESEARCH DISCLOSURE, Bd. 299, Nr. 031, 10.März 1989 EMSWORTH, GB, ANONYMOUS 'Synergistic herbicidal compsn. contg. 6-chloro-triazine deriv. - pyridate and a chloro-acetamide cpd.'

## Beschreibung

Die Erfindung betrifft eine herbizid wirkende, konzentrierte stabile Suspension aus 1,3,5-Triazinen, Pyridate, organischen Lösungsmitteln und Emulgatoren.

Synergistische herbizide Mittel bestehend aus Phenylpyridazinen und Cyanazin sind beispielsweise aus EP-A-0 009 616 und lagerstabile Suspensionen einer leicht löslichen (z.B. Chlorpropham) und einer schwer löslichen Komponente (z.B. Simazine) sind beispielsweise aus JP-A-57 002 202 bekannt.

Es ist weiter bekannt, daß verschiedene 1,3,5-Triazine ausgezeichnete herbizide Eigenschaften aufweisen. Durch die oft jahrzehntelange Anwendung dieser Produkte sind jedoch viele Schadpflanzen resistent geworden, sodaß sie auch bei Anwendung hoher Wirkstoffdosen nicht mehr bekämpft werden können. Es ist weiters bekannt, daß das Problem der Resistenz durch die kombinierte Anwendung von z.B. Atrazin mit der Verbindung 6-Chlor-3-phenylpyridazin-4-yl-5-octyl-thiocarbonat ("Pyridate") zu einem Gutteil zu lösen ist.

Diese kombinierte Anwendung erfolgte bisher auf zweierlei Weise. Erstens in Form von Tankmischungen, wobei die kommerziell erhältlichen fertigen Formulierungen der beiden Einzelwirkstoffe unmittelbar vor der Ausbringung auf das Feld mit Wasser auf Anwendungskonzentration verdünnt werden. Solche Tankmischungen haben für den Hersteller den Nachteil, daß zwei getrennte Formulierungen hergestellt und verpackt werden müssen, für den Anwender den Nachteil, daß zwei Packungen gelagert und gehandhabt werden müssen. Weiters besteht die Gefahr von Fehldosierungen, wenn der Landwirt beide Produkte, die oft von verschiedenen Herstellern angeboten werden, zusammen anwendet, da die Einzelwirkstoffe meist eine andere Dosierung verlangen, als deren Kombination.

Zweitens in Form einer Fertigformulierung, zu deren Herstellung Pyridate, das bei Raumtemperatur flüssig ist, auf einen saugfähigen Trägerstoff, z.B. hochdisperse Kieselsäure, aufgesaugt, mit Netz- und Dispermitteln sowie mit dem Feststoff Atrazin versetzt und die Mischung zu einem benetzbaren Pulver vermahlen wird. Dieses Produkt hat den Handelsnamen PRADO WP. Die Verdünnung auf Anwendungskonzentration ist zwar in diesem Fall einfacher und die Gefahr von Fehldosierungen ist weniger gegeben, jedoch hat sich herausgestellt, daß sowohl bei der Tankmischung, als auch bei der Fertigformulierung als Spritzpulver mit den empfohlenen Aufwandmengen einige wesentliche Unkräuter nicht zufriedenstellend bekämpft werden können.

Aufgabe der vorliegenden Erfindung war es daher, eine stabile Formulierung zu finden, die alle wesentlichen Unkräuter zufriedenstellend bekämpft und bei der mit geringerer Aufwandmenge der Einzelwirkstoffe eine bessere Wirkung gegen Unkräuter erreicht wird.

Unerwarteterweise wurde gefunden, daß eine Suspension von herbizid wirkenden 1,3,5-Triazinen in einer Lösung von Pyridate diesen Anforderungen entspricht.

Gegenstand der Erfindung ist demnach eine konzentrierte stabile Suspension von herbizid wirkenden 1,3,5-Triazinen in einer Lösung von Pyridate in einem organischen Lösungsmittel oder Lösungsmittelgemisch, in welchem Pyridate bei O °C zu mindestens 10 Gew.% und die 1,3,5-Triazine zu höchstens 1 Gew.% löslich sind, zusammen mit Emulgatoren .

Pyridate ist die Verbindung 6-Chlor-3-phenylpyridazin-4-yl-5-octyl-thiocarbonat. Herbizid wirkende 1,3,5-Triazine sind beispielsweise Atrazin, Terbuthylazin, Simazin, Propazin und Cyanazin. Erfindungsgemäss sind davon Atrazin und Terbuthylazin bevorzugt.

Einerseits soll Pyridate in dem organischen Lösungsmittel möglichst gut, das ist bei 0 °C zu mindestens 10 Gew.%, vorzugsweise zu mindestens 20 Gew.% löslich sein. Nach oben sind der Löslichkeit von Pyridate keine Grenzen gesetzt, üblicherweise wird sie nicht über 50 Gew.% betragen. Die Löslichkeit bei 0 °C ist wichtiger als die Löslichkeit bei 20 °C, da die Formulierung auch eine gute Kältestabilität aufweisen muß. Das organische Lösungsmittel oder Lösungsmittelgemisch muß Pyridate gegenüber chemisch inert sein. Andererseits soll das 1,3,5-Triazin eine möglichst gute Suspension in dem organischen Lösungsmittel bilden und darin möglichst unlöslich sein, damit es bei Temperaturschwankungen zu keinem Kristallwachstum kommt. Aus diesem Grund soll die Löslichkeit des Triazins bei 0 °C unter 1 Gew.%, vorzugsweise unter 0,1 Gew.% betragen.

Beispiele für derartige organische Lösungsmittel oder Lösungsmittelgemische sind:
n-Paraffine mit 6 - 14 C-Atomen, paraffinische Mineralöle mit Siedebereichen zwischen 100 und > 400 ° C, welche aus n- und/oder i-Paraffinen und/oder Cycloaliphaten bestehen und 0 - 50 % Aromaten enthalten können, aromatische Öle mit 50 - 100 % Aromaten im Siedebereich zwischen 130 und 280 °C, insbesondere aromatische Kohlenwasserstoffe, sowie Öle pflanzlichen Ursprungs wie z.B. Rapsöl, Sonnenblumenöl, Sojaöl, Erdnußöl, Baumwollsamenöl, Maiskeimöl und andere. Weiters Alkylester, insbesondere niedere Alkylester von Fettsäuren, z.B. Rapsölmethylester oder Mischungen aus Pflanzenölen und Pflanzenölfettsäure-Alkylestern, sowie Gemische dieser Lösungsmittel.

Geeignete Emulgatoren sind solche, die einerseits die Lösung von Pyridate in dem organischen Lösungsmittel beim Eintragen in Wasser gut emulgieren und andererseits den dispergierten Feststoff, das 1,3,5-Triazin, so dispergieren, daß eine stabile, nicht flockende Suspoemulsion entsteht, aus der sich weder Öl noch Feststoff abscheiden.

Besonders bewährt haben sich Kombinationen von ionischen und nicht-ionischen Emulgatoren, wie Mischungen aus geradkettigem oder verzweigtem Ca-Dodecylbenzolsulfonat mit ethoxyliertem Alkylphenol, wie etwa von Nonylphenolethoxylaten mit 4 - 8 mol Ethylenoxid, oder von Oktylphenolethoxylaten mit 4 - 8 mol Ethylenoxid. Mischungen aus geradkettigem oder verzweigtem Ca-Dodecylbenzolsulfonat mit Polyoxyethylen-sorbitan-fettsäureestern, oder Mischungen aus geradkettigem oder verzweigtem Ca-Dodecylbenzolsulfonat mit ethoxyliertem Rizinusöl mit 5 - 80 mol Ethylenoxid. Weiters Mischungen aus geradkettigem oder verzweigtem Ca-Dodecylbenzolsulfonat mit ethoxyliertem und propoxyliertem linearem oder verzweigtem Alkohol mit 4 - 18 C-Atomen und 2 - 50 mol Ethylenoxid bzw. Propylenoxid, sowie Mischungen aus den angeführten Mischungen.

Da ölige Suspensionen je nach Viskosität mehr oder weniger stark zum Absetzen des Feststoffes neigen, ist es vorteilhaft, der Formulierung auch noch Verdickungs-oder Antisedimentationshilfsmittel zuzusetzen. Als solche eignen sich beispielsweise: Pyrogene Kieselsäure (AEROSIL 200 von Fa. Degussa oder CABOSIL von Fa. Cabot), hydrophobierte pyrogene Kieselsäure (z.B. AEROSIL R972, AEROSIL R974), fein gemahlene gefällte Kieselsäure (z.B. WESSALON S von Fa. Degussa), fein gemahlene hydrophobierte gefällte Kieselsäure (z.B. WESSALON D17 von Fa. Degussa), pyrogenes Aluminiumoxid (z.B. Aluminiumoxid C von Fa. Degussa), Attapulgit-Tone (z.B. ATTAGEL 50 oder ATTASORB von Fa. Engelhardt), Betonite, oder sehr fein gemahlener Talk.

Zur Herstellung der konzentrierten stabilen Suspension werden Pyridate und Emulgator oder Emulgatorgemisch in dem organischen Lösungsmittel oder Lösungsmittelgemisch unter Rühren gelöst, worauf der so erhaltenen homogenen Lösung das 1,3,5-Triazin und gegebenenfalls das Antisedimentationshilfsmittel zugesetzt und so lange gerührt werden, bis der Feststoff fein verteilt ist. Um die Teilchengröße des Feststoffes zu verringern, wird anschließend in einer Perlmühle naß vermahlen.

In der fertigen konzentrierten stabilen Suspension beträgt der Gehalt an Pyridate 1 - 80 Gew.%, vorzugsweise 10 - 30 Gew.%, der Gehalt an Triazin 1 - 60 Gew.%, vorzugsweise 10 - 30 Gew.%.

Die erfindungsgemäßen Formulierungen sind sehr lagerstabil. So konnte auch nach 12 Wochen Lagerung bei 40 °C der gebildete Bodensatz bzw. Überstand durch leichtes Schütteln zur Gänze beseitigt werden, wobei die wesentlichen physikalischen Parameter, wie Viskosität oder Emulsionsstabilität weitgehend unverändert blieben.

### A HERSTELLUNGSBEISPIELE

### Beispiel 1:

20 Gew.Teile Pyridate, 10 Gew.Teile eines Emulgatorgemisches bestehend aus 8 Gew.Teilen eines ethoxylierten Nonylphenols mit 6 mol Ethylenoxid und 2 Gew.Teilen eines linearen Ca-Dodecylbenzolsulfonates werden in 54 Gew.Teilen eines paraffinischen Mineralöles mit einem Siedebereich von 350 bis 460 °C bei Normaldruck und einer kinematischen Viskosität von 44 mm²/sek bei 20 °C gelöst. Dann werden 16 Gew.Teile Atrazin zugegeben und gerührt, bis eine homogene Suspension entstanden ist. Um die Teilchengröße des Atrazins und damit das Absetzen zu verringern, wird diese Suspension anschließend in einer Perlmühle naß vermahlen, bis eine Viskosität von 1500 mPa.sek, gemessen mit dem Viskosimeter Brookfield LVT mit Spindel 2 bei 6 UpM erreicht ist. Eine 1 %-ige Dispersion dieser Formulierung in hartem und weichem Wasser zeigte gute Stabilität. Es war nach einer Stunde keine Abscheidung von Rahm oder Öl und kein Absetzen von Feststoff festzustellen.

### Beispiel 2:

15 Gew.Teile Pyridate und 10 Gew.Teile eines Emulgatorgemisches bestehend aus 6 Gew.Teilen eines ethoxylierten Nonylphenols mit 6 mol Ethylenoxid, 3 Gew.Teilen eines ethoxylierten Rizinusöls mit 25 mol Ethylenoxid und 1 Gew.Teil eines linearen Ca-Dodecylbenzolsulfonates werden in 50 Gew.Teilen eines Mineralölgemisches bestehend aus 25 % aromatischen Kohlenwasserstoffen mit einem Siedebereich von 180 bis 200 °C und 75 % paraffinischen und cycloaliphatischen Kohlenwasserstoffen mit einem Siedebereich von 185 bis 215 °C gelöst. Danach werden 25 Gew.Teile Atrazin zugegeben und gerührt, bis eine homogene Suspension entstanden ist. Um die Teilchengröße des Atrazins und damit das Absetzen zu verringern, wird die Suspension anschließend in einer Perlmühle naß vermahlen, bis eine Viskosität von 1500 mPa.sek, gemessen mit dem Viskosimeter Brookfield LVT mit Spindel 2 bei 6 UpM erreicht ist. Die Formulierung dispergierte spontan beim Eingießen in Wasser. Eine 1 %-ige Dispersion dieser Formulierung zeigte dieselbe Stabilität wie unter Beispiel 1 beschrieben.

### Beispiel 3:

15 Gew.Teile Pyridate, 10 Gew.Teile eines Emulgatorgemisches bestehend aus 7 Gew.Teilen eines ethoxylierten Nonylphenols mit 6 mol Ethylenoxid, 2 Gew.Teilen eines ethoxylierten Rizinusöls mit 25 mol Ethylenoxid und 1 Gew.Teil eines linearen Ca-Dodecylbenzolsulfonates werden in 50 Gew.Teilen eines Öls bestehend aus einer Mischung von Rapsöl und Rapsölmethylester im Gewichtsverhältnis 1: 1 gelöst. Dann werden 25 Gew.Teile Atrazin zugegeben und gerührt, bis eine homogene Suspension entstanden ist. Um die Teilchengröße des Atrazins und damit das Absetzen zu verringern, wird die Suspension anschließend in einer Perlmühle naß vermahlen, bis eine Viskosität von 2000 mPa.sek, gemessen mit dem Viskosimeter Brookfield LVT mit Spindel 2 bei 6 UpM erreicht ist. Die Formulierung dispergierte spontan beim Eingießen in Wasser. Eine 1 %-ige Dispersion dieser Formulierung zeigte in hartem und weichem Wasser dieselbe Stabilität wie die Formulierung gemäß Beispiel 1.

### Beispiel 4:

20 Gew.Teile Pyridate, 10 Gew.Teile eines Emulgatorgemisches bestehend aus 2 Gew.Teilen eines ethoxylierten Ölsäure-sorbitan-esters mit 20 mol Ethylenoxid, 1 Gew.Teil eines ethoxylierten Rizinusöls mit 25 mol Ethylenoxid und 7 Gew.Teilen eines linearen Ca-Dodecylbenzolsulfonates werden in 55 Gew.Teilen eines Öls bestehend aus einer Mischung von Rapsöl und Rapsölmethylester im Gewichtsverhältnis 1: 1 gelöst. Dann werden 15 Gew.Teile Atrazin zugegeben und gerührt, bis eine homogene Suspension entstanden ist. Die Suspension wird naß vermahlen. Die Formulierung dispergierte spontan beim Eingießen in Wasser. Eine 1 %-ige Dispersion dieser Formulierung zeigte dieselbe Stabilität wie die Formulierung gemäß Beispiel 1.

### Beispiel 5:

16 Gew.Teile Pyridate, 10 Gew.Teile eines Emulgatorgemisches bestehend aus 7 Gew.Teilen eines ethoxylierten Nonylphenols mit 6 mol Ethylenoxid, 2 Gew.Teilen eines ethoxylierten Rizinusöls mit 25 mol Ethylenoxid und 1 Gew.Teil eines linearen Ca-Dodecylbenzolsulfonates werden in 50 Gew.Teilen eines Öls bestehend aus einer Mischung von Rapsöl und Rapsölmethylester im Gewichtsverhältnis 1: 1 gelöst. Dann werden 25 Gew.Teile Terbuthylazin zugegeben und gerührt, bis eine homogene Suspension entstanden ist. Um die Teilchengröße des Terbuthylazins und damit das Absetzen zu verringern, wird die Suspension anschließend in einer Perlmühle naß vermahlen, bis eine Viskosität von 2000 mPa.sek, gemessen mit dem Viskosimeter Brookfield LVT mit Spindel 2 bei 6 UpM erreicht ist. Die Formulierung dispergierte spontan beim Eingießen in Wasser. Eine 1 %-ige Dispersion dieser Formulierung zeigte in hartem und weichem Wasser dieselbe Stabilität wie die Formulierung gemäß Beispiel 1.

### Beispiel 6:

30 Gew.Teile Pyridate, 11 Gew.Teile eines Emulgatorgemisches bestehend aus 9 Gew.Teilen eines ethoxylierten Nonylphenols mit 6 mol Ethylenoxid und 2 Gew.Teilen eines linearen Ca-Dodecylbenzolsulfonates werden in 42,3 Gew.Teilen eines paraffinischen Mineralöles mit einem Siedebereich von 350 bis 460 °C bei Normaldruck und einer kinematischen Viskosität von 44 mm²/sek bei 20 °C gelöst. Dann werden 16,7 Gew.Teile Terbuthylazin zugegeben und gerührt, bis eine homogene Suspension entstanden ist. Diese wird naß vermahlen. Eine 1 %-ige Dispersion dieser Formulierung zeigte dieselbe Stabilität wie die Formulierung gemäß Beispiel 1.

### Beispiel 7:

20 Gew.Teile Pyridate, 10 Gew.Teile eines Emulgatorgemisches bestehend aus 8 Gew.Teilen eines ethoxylierten Nonylphenols mit 6 mol Ethylenoxid und 2 Gew.Teilen eines linearen Ca-Dodecylbenzolsulfonates werden in 50 Gew.Teilen eines paraffinischen Mineralöles mit einem Siedebereich von 350 bis 460 °C bei Normaldruck und einer kinematischen Viskosität von 44 mm²/sek bei 20 °C gelöst. Dann wurden 16 Gew.Teile Atrazin und 4 Teile ATTAGEL 50 als Antisedimentationszusatz zugegeben und gerührt, bis eine homogene Suspension entstanden ist. Um die Teilchengröße des Atrazins zu verringern, wird die Suspension anschließend in einer Perlmühle naß vermahlen, bis eine Viskosität von 1500 mPa.sek, gemessen mit dem Viskosimeter Brookfield LVT mit Spindel 2 bei 6 UpM erreicht ist. Diese Formulierung wurde in einer verschlossenen Glasflasche 12 Wochen bei 40 °C gelagert und danach die Höhe des abgesetzten Atrazins bzw. die Höhe des klaren gelben Überstandes bestimmt.
Der Überstand betrug 9 % der Gesamthöhe und ließ sich durch leichtes Schütteln wieder homogenisieren. Es hatte sich kein klebriger, nicht aufschüttelbarer Bodensatz gebildet.

### Beispiel 8:

15 Gew.Teile Pyridate, 10 Gew.Teile eines Emulgatorgemisches bestehend aus 6 Gew.Teilen eines ethoxylierten Nonylphenols mit 6 mol Ethylenoxid, 3 Gew.Teilen eines ethoxylierten Rizinusöls mit 25 mol Ethylenoxid und 1 Gew.Teil eines linearen Ca-Dodecylbenzolsulfonates werden in 48 Gew.Teilen eines Mineralölgemisches bestehend aus 25 % aromatischen Kohlenwasserstoffen mit einem Siedebereich von 180 bis 200 °C und 75 % paraffinischen und cycloaliphatischen Kohlenwasserstoffen mit einem Siedebereich von 185 bis 215 °C bei Normaldruck gelöst. Dann werden 25 Gew.Teile Atrazin und 2 Teile AEROSIL R972 zugegeben und gerührt, bis eine homogene Suspension entstanden ist. Um die Teilchengröße des Atrazins zu verringern, wird diese Suspension anschließend in einer Perlmühle naß vermahlen, bis eine Viskosität von 2500 mPa.sek, gemessen mit dem Viskosimeter Brookfield LVT mit Spindel 2 bei 6 UpM erreicht ist. Diese Formulierung wurde in einer verschlossenen Glasflasche 12 Wochen bei 40 °C gelagert und danach die Höhe des abgesetzten Atrazins bzw. die Höhe des klaren gelben Überstandes bestimmt.
Der Überstand betrug 25 % der Gesamthöhe und ließ sich durch leichtes Schütteln wieder homogenisieren. Es hatte sich kein klebriger, nicht aufschüttelbarer Bodensatz gebildet.

### Beispiel 9:

10 Gew.Teile Pyridate, 11 Gew.Teile eines Emulgatorgemisches aus 9 Gew.Teilen eines ethoxylierten Nonylphenols mit 6 mol Ethylenoxid und 2 Gew.Teilen eines linearen Ca-Dodecylbenzolsulfonates werden in 49 Gew.Teilen eines paraffinischen Mineralöles mit einem Siedebereich von 350 bis 460 °C bei Normaldruck und einer kinematischen Viskosität von 44 mm²/sek bei 20 °C gelöst. Dann werden 30 Gew.Teile Simazin zugegeben und gerührt, bis eine homogene Suspension entstanden ist. Um die Teilchengröße des Simazins und damit das Absetzen zu verringern, wird die Suspension anschließend in einer Perlmühle naß vermahlen, bis eine Viskosität von ca. 2000 mPa.sek, gemessen mit dem Viskosimeter Brookfield LVT mit Spindel 2 bei 6 UpM erreicht ist. Eine 1 %-ige Dispersion dieser Formulierung in hartem und weichem Wasser zeigte gute Stabilität. Es war nach einer Stunde keine Abscheidung von Rahm oder Öl und kein Absetzen von Feststoff festzustellen.

### Vergleichsbeispiel V1:

Kommerziell erhältliches Spritzpulver mit der Bezeichnung LENTAGRAN WP. Die Formulierung enthält 45 % Pyridate.

### Vergleichsbeispiel V2:

Kommerziell erhältliches Emulsionskonzentrat von Pyridate mit der Bezeichnung LENTAGRAN EC. Die Formulierung enthält 450 g/l Pyridate.

### Vergleichsbeispiel V3:

Kommerziell erhältliches Suspensionskonzentrat von Atrazin mit der Bezeichnung LENTAZIN flüssig. Die Formulierung enthält 500 g/l Atrazin.

### Vergleichsbeispiel V4:

Kommerziell erhältliches Suspensionskonzentrat von Terbuthylazin mit der Bezeichnung GARDOPRIM 500. Die Formulierung enthält 500 g/l Terbuthylazin.

### Vergleichsbeispiel V5:

Kommerziell erhältliches Spritzpulver mit der Bezeichnung PRADO WP. Die Formulierung enthält 25 % Pyridate und 20 % Atrazin.

### Vergleichsbeispiel V6:

### Spritzpulverformulierung von Pyridate + Terbuthylazin:

In einem geeigneten Mischer mit einer Vorrichtung zum Einsprühen einer Flüssigkeit wurden 35 Gew.Teile gefällte Kieselsäure und 13 Gew.Teile Kaolin vorgelegt und 25 Gew.Teile flüssiges Pyridate unter laufendem Mischen aufgesprüht. Pyridate wurde dabei von dem Trägerstoff absorbiert und es entstand ein frei fließendes trockenes Pulver. Danach wurden 20 Gew.Teile Terbuthylazin, 5 Gew.Teile Ca-Ligninsulfonat, 2 Gew.Teile Na-Diisobutylnaphthalinsulfonat zugemischt und die gebildete Mischung auf einer Stiftmühle fein vermahlen.

### B ANWENDUNGSBEISPIELE

Zum Vergleich der neuen erfindungsgemäßen Formulierungen mit Pulverformulierungen und Tankmischungen wurden Versuche im Freiland unter Praxisbedingungen angelegt.

Als Versuchsflächen wurden Maisfelder mit entsprechender Verunkrautung ausgewählt. Als Grundlage zur Durchführung der Feldversuche dienten die Richtlinien der Biologischen Bundesanstalt in Braunschweig.
Die Parzellengröße betrug 19 m² (3,8 x 5,0 m). Die Ausbringung erfolgte mit tragbaren, preßluftbetriebenen Parzellenspritzgeräten mit 4 m Spritzbalkenbreite und Teejet Düsen 11003. Die Wasseraufwandmenge wurde mit 300 l/ha bei einem Spritzdruck von 3,0 bar festgelegt. Jede Variante wurde zweimal je Standort appliziert, wobei zwischen den beiden Wiederholungen ein 2 m breiter unbehandelter Kontrollstreifen belassen wurde. Die Auswertung der Versuche erfolgte durch optische Bonituren. Die Unkrautwirkung der einzelnen Varianten wurde anhand der EWRC-Skala benotet und anschließend über ein Rechenmodell in % Unkrautbekämpfung ausgedrückt. In diesen Feldversuchen zeigen die erfindungsgemäßen Formulierungen durchwegs eine stärkere Wirkung bei gleicher oder verringerter Wirkstoffaufwandmenge insbesondere gegen Schadgräser wie Echinocloa-, Digitaria- und Setaria-Arten.

Die Ergebnisse sind in den Beispielen 10 - 17 zusammengestellt. In den Tabellen bedeuten:
- Wirkstoffe:: Pyr = Pyridate
Ter = Terbutylazin
Atr = Atrazin
- Unkräuter:: AMARE = Amaranthus retroflexus
ANGAR = Anagallis arvensis
CHEAL = Chenopodium album
DIGIS = Digitaria ischaemum
ECHCG = Echinocloa crus-galli
FALCO = Fallopia convolvulus
GALAP = Galium aparine
GASPA = Galinsoga parviflora
LAPCO = Lapsana communis
MATCH = Matricaria chamomilla
POLAV = Polygonum aviculare
POLPE = Polygonum persicaria
SETVE = Setaria verticillata
SETVI = Setaria viridis
SOLNI = Solanum nigrum

### Beispiel 10 (Durchschnitt aus 5 Versuchen)

| Beispiel | Aufwandmenge/ha | | Wirkstoff | AMARE | CHEAL | ECHCG | GASPA |
|---|---|---|---|---|---|---|---|
| | Produkt | Wirkstoff | | | | | |
| V6 | 4,0 kg | 1000 g | Pyr | | | | |
| | | 800 g | Ter | 100 | 100 | 70,7 | 100 |
| 6 | 3,3 l | 990 g | Pyr | | | | |
| | | 551 g | Ter | 100 | 100 | 80,7 | 100 |

### Beispiel 11 (Durchschnitt aus 5 Versuchen)

| Beispiel | Aufwandmenge/ha | | Wirkstoff | AMARE | CHEAL | ECHCG | FALCO | GALAP |
|---|---|---|---|---|---|---|---|---|
| | Produkt | Wirkstoff | | | | | | |
| V5 | 3,0 kg | 750 g | Pyr | | | | | |
| | | 600 g | Atra | 99,3 | 99,0 | 8,9 | 100 | 100 |
| 1 | 3,75 l | 750 g | Pyr | | | | | |
| | | 600 g | Atra | 99,5 | 99,8 | 32,5 | 100 | 100 |

### Beispiel 12 (Durchschnitt aus 5 Versuchen)

| Beispiel | Aufwandmenge/ha | | Wirkstoff | CHEAL | ECHCG | GALAP | MATCH | POLPE |
|---|---|---|---|---|---|---|---|---|
| | Produkt | Wirkstoff | | | | | | |
| V2 | 1,5 l | 675 g | Pyr | | | | | |
| V3 | 2,25 l | 1125 g | Atra | 100 | 91,2 | 100 | 98,7 | 100 |
| 2 | 4,5 l | 675 g | Pyr | | | | | |
| | | 1125 g | Atra | 100 | 92,5 | 100 | 100 | 100 |
| 3 | 4,5 l | 675 g | Pyr | | | | | |
| | | 1125 g | Atra | 100 | 100 | 100 | 100 | 100 |

### Beispiel 13 (Durchschnitt aus 2 Versuchen)

| Beispiel | Aufwandmenge/ha | | Wirkstoff | CHEAL | ECHCG | LAPCO |
|---|---|---|---|---|---|---|
| | Produkt | Wirkstoff | | | | |
| V2 | 1,5 l | 675 g | Pyr | | | |
| V3 | 2,25 l | 1125 g | Atra | 90 | 92,5 | 100 |
| 2 | 4,5 l | 675 g | Pyr | | | |
| | | 1125 g | Atra | 95 | 98,7 | 100 |
| 3 | 4,5 l | 675 g | Pyr | | | |
| | | 1125 g | Atra | 90 | 97,5 | 100 |

### Beispiel 14 (Durchschnitt aus 2 Versuchen)

| Beispiel | Aufwandmenge/ha | | Wirkstoff | CHEAL | ECHCG | LAPCO |
|---|---|---|---|---|---|---|
| | Produkt | Wirkstoff | | | | |
| V2 | 1,5 l | 675 g | Pyr | | | |
| V4 | 2,25 l | 1125 g | Ter | 85 | 87,5 | 100 |
| 5 | 4,5 l | 675 g | Pyr | | | |
| | | 1125 g | Ter | 85 | 96,2 | 100 |

### Beispiel 15 (Durchschnitt aus 4 Versuchen)

| Beispiel | Aufwandmenge/ha | | Wirkstoff | AMARE | CHEAL | DIGIS | ECHCG | SETVE | SETVI |
|---|---|---|---|---|---|---|---|---|---|
| | Produkt | Wirkstoff | | | | | | | |
| V1 | 3,0 kg | 1350 g | Pyr | | | | | | |
| V4 | 2,0 l | 1000 g | Ter | 100 | 100 | 1,0 | 39,7 | 59,4 | 48,7 |
| 5 | 4,0 l | 600 g | Pyr | | | | | | |
| | | 1000 g | Ter | 100 | 100 | 16,7 | 68,7 | 66,9 | 48,7 |

### Beispiel 16 (Durchschnitt aus 5 Versuchen)

| Beispiel | Aufwandmenge/ha | | Wirkstoff | CHEAL | AMARE | SOLNI | ANGAR | POLPE |
|---|---|---|---|---|---|---|---|---|
| | Produkt | Wirkstoff | | | | | | |
| V2 | 1,33 l | 600 g | Pyr | | | | | |
| V3 | 1,5 l | 750 g | Atra | 97 | 98,3 | 99,3 | 100 | 36,7 |
| 3 | 3,0 l | 450 g | Pyr | | | | | |
| | | 750 g | Atra | 99 | 99,1 | 99,3 | 100 | 60,0 |

### Beispiel 17 (Durchschnitt aus 3 Versuchen)

| Beispiel | Aufwandmenge/ha | | Wirkstoff | POLAV | AMARE | MATCH | CHEAL |
|---|---|---|---|---|---|---|---|
| | Produkt | Wirkstoff | | | | | |
| V2 | 1,0 l | 450 g | Pyr | | | | |
| V3 | 1,5 l | 750 g | Atra | 92,5 | 87,5 | 65 | 75 |
| 3 | 2,5 l | 375 g | Pyr | | | | |
| | | 625 g | Atra | 90,0 | 82,5 | 70 | 75 |
| 3 | 3,0 l | 450 g | Pyr | | | | |
| | | 750 g | Atra | 96,5 | 90,0 | 70 | 85 |

## Patentansprüche

1. Konzentrierte, stabile Suspension von herbizid wirkenden 1,3,5-Triazinen in einer Lösung von Pyridate in organischen Lösungsmitteln oder Gemischen hievon, in welchen bei 0 °C Pyridate zu mindestens 10 Gew.% und die 1,3,5-Triazine zu höchstens 1 Gew.% löslich sind, zusammen mit Emulgatoren.

2. Konzentrierte, stabile Suspension nach Anspruch 1, dadurch gekennzeichnet, daß in den organischen Lösungsmitteln bei 0 °C Pyridate zu mindestens 20 Gew.% und die 1,3,5-Triazine zu höchstens 0,1 Gew.% löslich sind.

3. Konzentrierte, stabile Suspension nach Anspruch 1, dadurch gekennzeichnet, daß als herbizid wirkendes 1,3,5-Triazin Atrazin verwendet wird.

4. Konzentrierte, stabile Suspension nach Anspruch 1, dadurch gekennzeichnet, daß als herbizid wirkendes 1,3,5-Triazin Terbuthylazin verwendet wird.

5. Konzentrierte, stabile Suspension nach Anspruch 1, dadurch gekennzeichnet, daß die organischen Lösungsmittel n-Paraffine mit 6-14 C-Atomen, paraffinische Mineralöle mit Siedebereichen zwischen 100 und > 400 °C mit 0 - 50 % Aromaten oder aromatische Öle mit 50 - 100 % Aromaten oder Gemische hievon sind.

6. Konzentrierte, stabile Suspension nach Anspruch 1, dadurch gekennzeichnet, daß die organischen Lösungsmittel Pflanzenöle, Alkylester von Fettsäuren, aromatische Öle oder Gemische hievon sind.

7. Konzentrierte, stabile Suspension nach Anspruch 1, dadurch gekennzeichnet, daß die Emulgatoren eine Kombination von ionischen und nicht-ionischen Emulgatoren sind.

8. Konzentrierte, stabile Suspension nach Anspruch 1, dadurch gekennzeichnet, daß sie Verdickungs- oder Antisedimentationshilfsmittel enthält.

9. Verfahren zur Bekämpfung von Unkräutern und Schadgräsern in landwirtschaftlich genutzten oder nicht genutzten Flächen, dadurch gekennzeichnet, daß man die konzentrierte, stabile Suspension nach Anspruch 1 auf Anwendungskonzentration verdünnt und damit die Flächen nach dem Auflaufen der Pflanzen behandelt.

10. Verfahren zur Bekämpfung von Unkräutern in landwirtschaftlich genutzten Flächen, dadurch gekennzeichnet, daß man die konzentrierte, stabile Suspension nach Anspruch 1 auf Anwendungskonzentration verdünnt und damit Maiskulturen nach dem Auflaufen der Pflanzen behandelt.

11. Verwendung einer konzentrierten Suspension nach Anspruch 1 zur Bekämpfung von Unkräutern und Schadgräsern in landwirtschaftlich genutzten oder nicht genutzten Flächen.

## Claims

1. Concentrated, stable suspension of herbicidally active 1,3,5-triazines in a solution of pyridate in organic solvents or mixtures thereof, in which at 0°C pyridate is at least 10% by weight soluble and the 1,3,5-triazines are at most 1% by weight soluble, together with emulsifiers.

2. Concentrated, stable suspension according to claim 1, characterized in that at 0°C pyridate is at least 20% by weight soluble in the organic solvents, and the 1,3,5-triazines are at most 0.1% by weight soluble therein.

3. Concentrated, stable suspension according to claim 1, characterized in that atrazine is used as the herbicidally active 1,3,5-triazine.

4. Concentrated, stable suspension according to claim 1, characterized in that terbuthylazine is used as the herbicidally active 1,3,5-triazine.

5. Concentrated, stable suspension according to claim 1, characterized in that the organic solvents are n-paraffins with 6-14 C-atoms, paraffinic mineral oils with a boiling point range between 100 and > 400°C with 0 - 50% aromatic substances, or aromatic oils with 50 - 100% aromatic substances, or mixtures thereof.

6. Concentrated, stable suspension according to claim 1, characterized in that the organic solvents are vegetable oils, alkyl esters of fatty acids, aromatic oils or mixtures thereof.

7. Concentrated, stable suspension according to claim 1, characterized in that the emulsifiers are a combination of ionic and non-ionic enulsifiers.

8. Concentrated, stable suspension according to claim 1, characterized in that it contains thickening or anti-sedimentation assistants.

9. Method for controlling weeds and harmful grasses in agriculturally used areas or set-aside areas, characterized in that the concentrated, stable suspension according to claim 1 is diluted to the application concentration, and thus the areas are treated after emergence of the plants.

10. Method for controlling weeds in agriculturally used areas, characterized in that the concentrated, stable suspension according to claim 1 is diluted to the application concentration, and thus maize cultivations are treated after emergence of the plants.

11. Use of a concentrated suspension according to claim 1, for the control of weeds and harmful grasses in agriculturally used areas or set-aside areas.

## Revendications

1. Une suspension concentrée stable de 1,3,5-triazines actives du point de vue herbicide dans une solution de pyridate dans des solvants organiques ou dans un de leurs mélanges, où à 0°C, le pyridate est au moins soluble à 10 % en poids et les 1,3,5-triazines sont au maximum solubles à 1% en poids, ensemble avec des émulsionnants.

2. Une suspension concentrée stable selon la revendication 1, caractérisée en ce que dans des solvant organiques, à 0°C, le pyridate est au moins soluble à 20 % en poids et les 1,3,5-triazines sont au maximum solubles à 0,1% en poids.

3. Une suspension concentrée stable selon la revendication 1, caractérisée en ce que comme 1,3,5-triazine active du point de vue herbicide, on utilise l'atrazine.

4. Une suspension concentrée stable selon la revendication 1, caractérisée en ce que comme 1,3,5-triazine active du point de vue herbicide, on utilise la terbuthylazine.

5. Une suspension concentrée stable selon la revendication 1, caractérisée en ce que les solvants organiques sont les n-paraffines ayant de 6 à 14 atomes de carbone, les huiles minérales paraffiniques avec un intervalle d'ébullition compris entre 100 et > 400°C avec de 0 à 50% d'hydrocarbures aromatiques ou les huiles aromatiques avec de 50 à 100 % d'hydrocarbures aromatiques ou un de leurs mélanges.

6. Une suspension concentrée stable selon la revendication 1, caractérisée en ce que les solvants organiques sont des huiles végétales, des esters alkyliques d'acides gras, des huiles aromatiques ou un de leurs mélanges.

7. Une suspension concentrée stable selon la revendication 1, caractérisée en ce que les émulsionnants sont une combinaison d'émulsionnants ioniques et non ioniques.

8. Une suspension concentrée stable selon la revendication 1, caractérisée en ce qu'elle contient des agents épaississants ou des agents anti-sédimentation.

9. Un procédé de lutte contre les mauvaises herbes et les herbes nuisibles sur des surfaces utilisables ou des surfaces non utilisables en l'agriculture, caractérisé en ce qu'on dilue la suspension concentrée stable selon la revendication 1 en une concentration utilisable et en ce qu'on traite avec elle les surfaces après l'émergence des plantes.

10. Un procédé de lutte contre les mauvaises herbes dans des zones utilisées pour l'agriculture, caractérisé en ce qu'on dilue la suspension concentrée stable selon la revendication 1 en une concentration utilisable et en ce qu'on traite avec elle les cultures de mais après l'émergence des plantes.

11. Utilisation d'une suspension concentrée selon la revendication 1 pour la lutte contre les mauvaises herbes et les herbes nuisibles sur des surfaces utilisables ou des surfaces non utilisables en agriculture.
